# EUROPÄISCHE PATENTSCHRIFT

(11) **EP 3 201 284 B1**
(45) Veröffentlichungstag und Bekanntmachung des Hinweises auf die Patenterteilung: **23.07.2025**
(21) Anmeldenummer: 15770467.7
(22) Anmeldetag: 14.09.2015
(51) Int. Cl.: C09K 3/10, C08K 3/04, C08L 21/00

(54) **DICHTKÖRPER FÜR DYNAMISCHE ANWENDUNGEN**
SEALING BODY FOR DYNAMIC APPLICATIONS
CORPS D'ÉTANCHÉITÉ POUR UTILISATIONS DYNAMIQUES

(30) Priorität: 01.10.2014 DE 102014014392
(43) Veröffentlichungstag der Anmeldung: 09.08.2017
(73) Patentinhaber: Carl Freudenberg KG, 69469 Weinheim (DE)
(72) Erfinder: TRABER, Boris, 69493 Hirschberg (DE); PORTELA CUBILLO, Christine, 64404 Bickenbach (DE); LEITNER, Helmut, 69502 Hemsbach (DE); GAA, Randolph, 68519 Viernheim (DE); KOBS, Olaf, 69517 Gorxheimertal (DE)
(86) Internationale Anmeldenummer: PCT/EP2015/070912
(87) Internationale Veröffentlichungsnummer: WO 2016/050487

(56) Entgegenhaltungen:
- EP-A1- 2 138 535
- FR-A1- 2 931 528
- JP-A- 2004 132 486
- BOKOBZA ET AL: "Multiwall carbon nanotube elastomeric composites: A review", POLYMER, ELSEVIER SCIENCE PUBLISHERS B.V, GB, vol. 48, no. 17, 3 August 2007 (2007-08-03), pages 4907 - 4920, XP022183984, ISSN: 0032-3861, DOI: 10.1016/J.POLYMER.2007.06.046

## Beschreibung

### Technisches Gebiet

Die Erfindung betrifft einen Dichtkörper für dynamische Anwendungen und seine Verwendung.

### Stand der Technik

Dichtkörper für dynamische Anwendungen dichten Systeme ab, bei denen sich die Dichtung und/oder die Gegenfläche bewegt. Diese Bewegung kann sowohl niederfrequente als auch hochfrequente Bewegungen umfassen und hat zur Folge, dass in dem Dichtkörper Abrieb erzeugt wird, der als Verschleiß sichtbar wird. Dies hat gegebenenfalls zur Folge, dass Reibwärme entsteht. Als Folge des Verschleißes kann der Dichtkörper außerdem undicht werden bzw. ausfallen. Die Aufgabe, den Verschleiß von Dichtkörpern für dynamische Anwendungen zu verringern, ist eine ständige Anforderung nach verlängerter Lebensdauer dieser Bauteile.

Bekannt ist, dass das Einbringen verschiedener Füllstoffe, insbesondere harter Füllstoffe in den Dichtkörper den Verschleiß reduzieren kann. Üblicherweise werden mineralische Füllstoffe eingesetzt. Hierdurch kann die Lebensdauer der Bauteile deutlich erhöht werden.

Die FR 2931528 A1 beschreibt eine Ventil- oder Pumpendichtung für eine Vorrichtung zur Abgabe eines fluiden Produkts, wobei die Dichtung mindestens ein Elastomer umfasst, das mit Nanoröhren, insbesondere Kohlenstoffnanoröhren, vermischt ist.

Die JP 2004 132486 A beschreibt eine Struktur zur Verhinderung von Geräuschen in einem Audiogerät durch statische Elektrizität, umfassend Dichtungsringe aus einem elastischen Material, das aus leitfähigem Gummi gebildet wird, der durch Mischen von Kohlenstoffnanoröhren mit einem Rohgummi erhalten wird.

Die EP 2138535 A1 beschreibt eine vulkanisierbare Zusammensetzung, die einen hydrierten Nitrilkautschuk, mindestens ein Vernetzungsmittel und Kohlenstoffnanoröhren enthält.

L. Bokobza gibt in Polymer 48 (2007), 4907 - 4920 einen Überblick über elastomere Komposite, die mehrwandige Kohlenstoffnanoröhren enthalten.

Nachteilig an den aus dem Stand der Technik bekannten Dichtkörpern ist, dass eine große Menge an harten Füllstoffen notwendig ist, um eine ausreichende Verschleißverringerung zu bewirken. Dies führt zu einer unerwünschten Erhöhung der Härte des Dichtkörpers. Darüber hinaus führen harte Füllstoffe zu einem starken Abrieb auf der Gegenlauffläche (Welleneinlauf), was ebenfalls eine Undichtigkeit und damit einen verfrühten Dichtungsausfall verursachen kann. Dazu kommt, dass die Lebensdauer dadurch stark begrenzt wird, dass Dichtkörper für dynamische Anwendungen sehr häufig hohen Temperaturen und hohen Drücken während der Anwendung ausgesetzt sind, wodurch sich der Abrieb des Dichtkörpers noch verstärkt. Dem wurde bislang durch hohe Füllstoffmengen entgegengetreten, um die Lebensdauer zu verlängern.

### Darstellung der Erfindung

Der Erfindung liegt die Aufgabe zu Grunde, einen Dichtkörper der eingangs genannten Art derart auszugestalten und weiterzubilden, dass dieser eine hohe Lebensdauer in Kombination mit einer für Dichtungsanwendungen geeigneten Härte aufweist. Der Dichtkörper soll ferner gute mechanische Eigenschaften aufweisen, beispielsweise einen geringen Verschleiß (Abrieb) und problemlos geräuscharm betrieben werden können. Darüber hinaus soll der Dichtkörper für Anwendungen im Hochtemperaturbereich und/oder bei hohen Drücken geeignet sein.

Erfindungsgemäß wird die voranstehende Aufgabe durch die folgenden Gegenstände der Erfindung gelöst..

Ein erster Gegenstand der Erfindung ist die Verwendung eines Dichtkörpers für dynamische Anwendungen als Stoßdämpferdichtung, mit einer Shore A Härte von 60 - 100, umfassend ein Kautschuk enthaltendes elastomeres Material sowie in dem elastomeren Material verteilte Carbon Nanotubes in einer Menge von 0,1 bis 20 phr, bezogen auf 100 Gewichtsteile Kautschuk.

Ein weiterer Gegenstand der Erfindung ist ein Dichtkörper für dynamische Anwendungen mit einer Shore A Härte von 60-100, umfassend ein Kautschuk enthaltendes elastomeres Material sowie in dem elastomeren Material verteilte Carbon Nanotubes in einer Menge von 0,1 bis 20 phr, bezogen auf 100 Gewichtsteile Kautschuk, wobei das elastomere Material FKM (Fluorkautschuk) aufweist, die elastomere Komponente in dem elastomeren Material zumindest teilweise vernetzt vorliegt und das elastomere Material weitere Füllstoffe enthält.

Unter einem Dichtkörper in einer dynamischen Anwendung versteht man einen Dichtkörper, der entweder selbst oder dessen Gegenfläche im abzudichtenden System einer dynamischen Bewegung unterworfen ist.

Carbon Nanotubes sind mikroskopisch kleine röhrenförmige Gebilde (molekulare Nanoröhren) aus Kohlenstoff. Ihre Wände bestehen aus Kohlenstoff, wobei die Kohlenstoffatome eine wabenartige Struktur mit Sechsecken und jeweils drei Bindungspartnern einnehmen.

Überraschend wurde erfindungsgemäß gefunden, dass durch Einbringen von Carbon Nanotubes bereits in einer geringen Menge eine signifikante Reduktion des Verschleißes von Dichtkörpern bei dynamischen Anwendungen erzielt werden kann. Dies gilt ebenfalls für die Verminderung des Verschleißes bei Hochtemperaturanwendungen. Zur Erzielung dieses Effektes werden darüber hinaus überraschenderweise lediglich sehr geringe Mengen von weniger als 20 phr Carbon Nanotubes benötigt. Ferner wurde gefunden, dass die Carbon Nanotubes enthaltenden Dichtkörper verglichen mit mineralisch und/oder Ruß-gefüllten Dichtkörpern gleicher Härte Shore A nur einen moderaten Härteanstieg verzeichnen. Somit können die erfindungsgemäßen Dichtkörper in den für dynamische Anwendungen besonders geeigneten Härtebereichen von 60-100 Shore A Härte hergestellt werden. Darüber hinaus wurde gefunden, dass das Einbringen von Carbon Nanotubes verglichen mit den bislang verwendeten herkömmlichen mineralischen Füllstoffen und/oder Rußen ein besseres Eigenschaftsbild im Hinblick auf weitere für dichtungstechnische Anwendungen relevante Eigenschaften, wie Reibungskoeffizient, Zugfestigkeit und Bruchdehnung hat. Ferner wurde gefunden, dass Carbon Nanotubes überraschenderweise trotz des geringen Füllstoffgehaltes und der hohen Härte der Mischung einen nur geringen Abrieb der Gegenlauffläche (Welleneinlauf) bewirken.

Untersuchungen haben ergeben, dass die erfindungsgemäßen Dichtkörper in Abhängigkeit von der Menge an eingebrachten Carbon Nanotubes Reibungskoeffizienten von weniger als µ=1, gemessen nach DIN ISO 151 13, aufweisen.

Ein weiterer Vorteil der Verwendung von Carbon Nanotubes in Dichtkörpern ist, dass diesen hierdurch elektrisch leitfähige Eigenschaften verliehen werden können. Die Kombination von elektrischer Leitfähigkeit mit reduziertem Verschleiß ist für verschiedene dynamische Anwendungen, wie Radialwellendichtringe, Hydraulikdichtungen, Stangendichtungen, Kolbendichtungen, Membrane, Bälge von besonderem Interesse.

Beispielsweise kann es durch die rotatorische Bewegung eines Radialwellendichtrings zu einer elektrostatischen Aufladung des Dichtkörpers kommen. Durch die herkömmlich eingesetzten mineralischen Füllstoffe kann die elektrische Ladung nicht abgeleitet werden, da diese isolierende Eigenschaften haben. Durch andere konventionelle Füllstoffsysteme, wie Leitfähigkeitsruße, wird der Dichtkörper zwar leitfähig gemacht, so dass infolgedessen auch die elektrostatische Aufladung abgeleitet werden kann. Derartige Füllstoffsysteme bewirken jedoch eine deutliche Verschlechterung des Verschleißes. Der erfindungsgemäße Einsatz von Carbon Nanotubes ermöglicht dagegen eine effektive Ableitung elektrostatischer Aufladung bei gleichzeitig erhöhtem Verschleißschutz. Gemäß einer bevorzugten Ausführungsform der Erfindung weist der Dichtkörper einen spezifischen elektrischen Durchgangswiderstand und/oder einen spezifischen Oberflächenwiderstand von < 10^6 (Ωxcm²)/cm gemessen nach DIN IEC 60093, bevorzugt von < 10^5 (Ωxcm²)/cm, insbesondere bevorzugt von < 10^4 (Ωxcm²)/cm auf. Des Weiteren kann der Dichtkörper problemlos geräuscharm betrieben werden. Praktische Versuche haben ergeben, dass mit Carbon Nanotubes bereits in einer Menge von weniger als 20 phr eine signifikante Reduktion des Verschleißes von Dichtkörpern bei dynamischen Anwendungen erzielt werden kann. Bevorzugt beträgt der Anteil der Carbon Nanotubes im Dichtkörper von 0,1 phr bis 15 phr , noch bevorzugter von 0,4 phr bis 10 phr, noch bevorzugter von 0,5 phr bis 7 phr und insbesondere von 1 phr bis 5 phr.

Die Einheit "parts per hundred rubber (phr)" ist eine übliche Einheit in der gummichemischen Industrie. Hiermit werden die Massenanteile der einzelnen Mischungsbestandteile in einem Rezept einer Elastomermischung bezeichnet. Dabei werden diese Angaben jeweils auf 100 (Massen-)Teile des Kautschuks oder der Kautschuke (bei Kautschukblends) bezogen.

Gemäß einer bevorzugten Ausführungsform der Erfindung liegen die Carbon Nanotubes in dem Dichtkörper gleichmäßig verteilt und/oder vereinzelt vor. Kommerziell verfügbare CNT liegen in der Regel im Agglomerat vor. Die gefundenen Eigenschaften von Carbon Nanotubes entfalten sich jedoch besser, wenn sie in der Polymermatrix gleichmäßig verteilt und/oder vereinzelt vorliegen. Eine gleichmäßige Vereinzelung und Verteilung kann auf einfache Weise in elektronenspektroskopischen Aufnahmen wie rasterelektronenmikroskopischen Aufnahmen nachgewiesen werden.

Die erfindungsgemäß bevorzugte Vereinzelung und gleichmäßige Verteilung kann beispielsweise durch Vordispergierung sowie stark scherende Aggregate, z. B. Querstiftmischextruder erreicht werden. Eine Vereinzelung und gleichmäßige Verteilung der Carbon Nanotubes im Dichtkörper kann auch durch Versuche nachgewiesen werden. So liegt erfindungsgemäß eine Vereinzelung und gleichmäßige Verteilung der Carbon Nanotubes im Dichtkörper zumindest dann vor, wenn bei einer Prüfplatte aus dem Material des Dichtkörpers mit den Maßen 200 x 200 x 2 mm bei mindestens 20 Zugversuchen nach der DIN 53504, jeweils in Längs- und Querrichtung gemessen, eine statistische Abweichung von Zugfestigkeit und Bruchdehnung von weniger als 30 %, bevorzugt weniger als 20 %, noch bevorzugter von weniger als 15 % noch bevorzugter von weniger als 12 %, insbesondere bevorzugt von weniger als 10 % gemessen wird. Messungen der Zugfestigkeit und Bruchdehnungen ergeben sich aus dem Zugversuch nach der DIN 53504, in der aus einer vulkanisierten Prüfplatte pro Zugversuch ein definierter Prüfkörper (S2-Stab) ausgestanzt wird und in einer Zugprüfmaschine bis zum Bruch gezogen wird. Das heißt, dass in diesem Versuch die anisotrope Verteilung der ermittelten Werte bestimmt wird.

Praktische Versuche haben ergeben, dass mit den verschiedensten Arten von Carbon Nanotubes gute Ergebnisse erzielt werden können. So kann der Durchmesser der Carbon Nanotubes in weiten Bereichen variieren. Als geeignet haben sich insbesondere Carbon Nanotubes mit mittleren Durchmessern im Bereich von 1 bis 100 nm, noch bevorzugter von 2 bis 50, noch bevorzugter von 3 bis 30, noch bevorzugter von 4 bis 20 und insbesondere von 5 bis 15 nm erwiesen.

Ferner können die Carbon Nanotubes ein- und/oder mehrwandig, als offene und/oder geschlossene Röhren vorliegen. Vorteilhaft an mehrwandigen Carbon Nanotubes ist, dass diese derzeit kostengünstiger sind.

Das elastomere Material kann die verschiedensten für Dichtungsmaterialien geeigneten Kautschuke enthalten. Dabei kann es sich um weitmaschig chemisch oder physikalisch vernetzte Polymere handeln, die sich unter ihrem Glaspunkt stahlelastisch verhalten und die bei Temperaturen oberhalb ihres Glaspunktes gummielastisch sind. Glastemperaturen von bevorzugt eingesetzten Kautschuken liegen bei 20° C und darunter. Bevorzugt verhalten sich die eingesetzten Kautschuke bis zu ihrer Schmelz- oder Zersetzungstemperatur gummielastisch.

Das elastomere Material könnte Ethylvinylacetat (EVA) enthalten. Dieser Kunststoff ist kostengünstig und bis 140°C stabil. Der elastische Kunststoffkörper könnte NBR (Nitril-Butadien-Kautschuk) enthalten. Dieser Kunststoff ist kostengünstig verarbeitbar. Das elastomere Material könnte HNBR (Hydrierter Nitril-Butadien-Kautschuk) enthalten. Dieser Kunststoff ist sogar bis 150°C stabil und halogenfrei. Das elastomere Material könnte FKM (Fluorkautschuk) enthalten. Dieser Kunststoff ist besonders chemisch stabil bei Kontakt mit Kraftstoffen. Das elastomere Material könnte Silikonelastomere enthalten. Diese Kunststoffe sind auch bei Temperaturen unter 0°C weich und elastisch. Insbesondere könnten fluorierte Silikonelastomere verwendet werden. Diese sind kraftstoffbeständig.

Das elastomere Material könnte NR (Naturkautschuk) enthalten. Vorteilhaft an der Verwendung von NR (Naturkautschuk) ist, dass NR (Naturkautschuk) besonders elastisch ist. Das elastomere Material könnte SBR (Styrol-Butadien- Kautschuk) enthalten. Vorteilhaft an SBR (Styrol-Butadien-Kautschuk) ist, dass dieser Kunststoff fast so elastisch ist wie NR (Naturkautschuk) dabei aber weniger Gaspermeation aufweist. Das elastomere Material könnte NBR (Nitril- Butadien-Kautschuk) enthalten. Vorteilhaft an der Verwendung dieses Kunststoffs ist, dass er ölbeständig und kälteflexibel ist. Das elastomere Material könnte HNBR (Hydrierter Nitril-Butadien-Kautschuk) enthalten. Vorteilhaft an der Verwendung von HNBR (Hydrierter Nitril-Butadien-Kautschuk) ist, dass dieser Kunststoff eine hohe Temperatur- und Medienbeständigkeit aufweist. Das elastomere Material könnte EPDM (Ethylen-Propylen-Dien-Kautschuk) enthalten. Vorteilhaft an der Verwendung dieses Kunststoffs ist, dass er eine hohe Beständigkeit in polaren Medien aufweist und somit ein Standardmaterial für Systeme darstellt, die insbesondere mit Wasser in Berührung kommen. Darüber hinaus ist EPDM resistent gegenüber Harnstoff- Lösungen und wässrigen Medien. Das elastomere Material könnte EPM (Ethylen-Propylen-Kautschuk) enthalten. Vorteilhaft an der Verwendung dieses Kunststoffs ist, dass er eine gute Beständigkeit gegenüber wässrigen Medien und eine gute Tieftemperaturflexibilität aufweist. Das elastomere Material könnte ACM (Acrylat-Kautschuk) enthalten. Vorteilhaft an der Verwendung dieses Kunststoffs ist, dass er eine hohe Beständigkeit in unpolaren Medien aufweist. ACM (Acrylat-Kautschuk) ist demzufolge ein Standardmaterial für Systeme, die vor allem mit unpolaren Ölen in Berührung kommen. Das elastomere Material könnte FFKM (Perfluor-Kautschuk) enthalten. Vorteilhaft an der Verwendung von FFKM (Perfluor-Kautschuk) ist, dass er eine ausgesprochen hohe Medien- und Temperat rbeständigkeit aufweist. Das elastomere Material könnte VMQ und PVMQ (Vinyl-Methyl-Polysiloxan und Phenyl-Vinyl-Methyl-Polysiloxan) enthalten. Vorteilhaft an der Verwendung dieses Kunststoffs ist, dass er sehr tieftemperaturflexibel ist. Der Kunststoffkörper könnte FVMQ (Fluormethyl-Vinyl-Polysiloxan) enthalten. Vorteilhaft an der Verwendung dieses Kunststoffs ist, dass er ebenfalls eine hohe Medien- und Temperaturbeständigkeit aufweist und dabei eine hervorragende Kälteflexibilität zeigt. Das elastomere Material könnte IR (Polyisopren) enthalten. Vorteilhaft an der Verwendung dieses Kunststoffs ist, dass er in guten Qualitäten erhältlich ist. Das elastomere Material könnte HR, CNR und BIIR (Butylkautschuk, Chlorbutylkautschuk und Brombutylkautschuk) enthalten. Vorteilhaft an der Verwendung dieser Kunststoff ist, dass sie sehr permeationsdicht sind. Das elastomere Material könnte AEM (Ethylen Acrylsäure-Kautschuk) enthalten. Vorteilhaft an der Verwendung dieses Kunststoffs ist, dass er hochdämpfend und beständig gegen Motor- und Getriebeöle ist. Das elastomere Material könnte BR (Butadienkautschuk) enthalten. Vorteilhaft an der Verwendung dieses Kunststoffs ist, dass er abriebbeständig und kälteflexibel ist. Das elastomere Material könnte CR (Chloropren-Kautschuk) enthalten. Vorteilhaft an der Verwendung dieses Kunststoffs ist, dass er witterungsbeständig ist. Das elastomere Material könnte ECO (Epichlohydrin-Kautschuk) enthalten. Vorteilhaft an der Verwendung dieses Kunststoffs ist, dass er permeationsdicht und beständig gegen Motor- und Getriebeöle ist. Das elastomere Material könnte CSM (Chlorsulfoniertes Polyethylen-Kautschuk) enthalten. Vorteilhaft an der Verwendung dieses Kunststoffs ist, dass er hochdämpfend und beständig gegen Motor- und Getriebeöle ist. Das elastomere Material könnte Polyurethan (PU) enthalten. Vorteilhaft an der Verwendung dieses Kunststoffs ist, dass er abriebbeständig ist. Das elastomere Material könnte TPE (Thermoplastische Elastomere, ABS und SBS) enthalten. Vorteilhaft an der Verwendung dieser Kunststoffklasse ist, dass sie kostengünstig verarbeitet werden kann.

Denkbar ist auch der Einsatz von Mischungen und/oder Blends der vorgenannten Materialien.

Erfindungsgemäß bevorzugt umfasst das elastomere Material FFKM, FKM, NR, IR, HR, CR, ECO, EPDM, EPM NBR, HNBR, PU, ACM, AEM, VMQ, FVMQ sowie Blends hiervon und/oder Gemische mit thermoplastischen Materialien. In praktischen Versuchen wurden besonders gute Ergebnisse mit der Verwendung von FKM erzielt.

Gemäß einer bevorzugten Ausführungsform der Erfindung enthält das elastomere Material PVMQ, VMQ, FVMQ sowie Blends davon und weist eine Shore A Härte >70 Shore auf. Erfindungsgemäß wurde gefunden, dass es möglich ist, einen auf diesen Materialien basierenden Dichtkörper herzustellen, der hohe Härten und guten Verschleiß kombiniert. Dies war deshalb überraschend, da bisherige kommerziell verfügbare Silikonmaterialien in Shore A-Härten über 80 Shore nicht erhältlich waren.

Gemäß einer weiteren bevorzugten Ausführungsform der Erfindung umfasst das elastomere Material EPDM PVMQ, VMQ, FVMQ, CR, ECO sowie Blends und/oder Gemische mit thermoplastischen Materialien davon und weist einen Verschleiß gemessen nach DIN ISO 4649 von < 120 mm³ auf.

Die elastomere Komponente im elastomeren Material liegt erfindungsgemäß bevorzugt zumindest teilweise vernetzt vor. Zur Vernetzung werden dabei bevorzugt folgende Vernetzungsmittel eingesetzt: Peroxide, Schwefel, Schwefel-Seife, Diamine, Polyamine, Diamincarbamate, Diole, Polyole, insbesondere Bisphenole, Diisocyanate, Polyisocyanate, Diepoxide, Polyepoxide, Diglycidylether, Triazine, Methylendianilin, Dicarbonsäuren, Polycarbonsäuren, Metalloxide, ETU, Platin-katalysator und/oder deren Mischungen bzw. Stoffe, die die vorgenannten Stoffe freisetzen. Zur Vernetzung können alternativ oder auch zusätzlich energiereiche Strahlen und/oder UV-Strahlung eingesetzt werden. Besonders bevorzugte Vernetzungsmittel sind Peroxide, Schwefel, Hexamethylendiamincarbamat, Hexamethylendiamin, Octamethylendiamin und/oder 2,2-Bis[4-(4-aminophenoxy)phenyl]propane und Bisphenole.

Gemäß einer bevorzugten Ausführungsform der Erfindung weist der Dichtkörper als elastomeres Material FKM, NBR, EPDM, AEM, VMQ, FVMQ, PVMQ und/oder HNBR auf, welches bevorzugt peroxidisch vernetzt vorliegt. Überraschend wurde erfindungsgemäß gefunden, dass ein derartiger Dichtkörper auch bei dynamischer Belastung kälteflexibel bis zu Temperaturen < -50 °C ist und gleichzeitig bei hohen Temperaturen (bis 170 °C) abrieb- und verschleißbeständig ist. So weist beispielsweise ein als Einrohr-Stoßdämpferdichtung (monotube) ausgebildeter erfindungsgemäßer Dichtkörper auf einem Tieftemperaturprüfstand bei Einwirkung einer dynamischen Bewegung einer Kolbenstange sowie einer gleichzeitig einmaligen seitlichen Auslenkung (sideload) der Stange eine Dichtigkeit bis zu einer Temperatur von -50 °C auf. Gemäß einer weiteren bevorzugten Ausführungsform weist der Dichtkörper als elastomeres Material FKM auf, welches bevorzugt bisphenolisch vernetzt vorliegt. Hier wurde erfindungsgemäß gefunden, dass ein derartiger Dichtkörper kälteflexibel bis zu Temperaturen < - 30 °C ist und gleichzeitig bei hohen Temperaturen (bis 170 °C) abrieb- und verschleißbeständig ist. Dies gilt auch bei Anwendungen mit hohen Drücken (bis 250 bar).

Gemäß einer weiteren bevorzugten Ausführungsform weist der Dichtkörper als elastomeres Material EPDM, NBR und HNBR auf, welches bevorzugt schwefelvernetzt vorliegt. Hier wurde erfindungsgemäß gefunden, dass ein derartiger Dichtkörper kälteflexibel bis zu Temperaturen < -60 °C ist und gleichzeitig bei hohen Temperaturen (bis 170 °C) abrieb- und verschleißbeständig ist. Dies gilt auch bei Anwendungen mit hohen Drücken (bis 250 bar).

Gemäß einer weiteren bevorzugten Ausführungsform weist der Dichtkörper als elastomeres Material ACM und AEM auf, welches bevorzugt diaminisch vernetzt vorliegt. Hier wurde erfindungsgemäß gefunden, dass ein derartiger Dichtkörper kälteflexibel bis zu Temperaturen < -30 °C ist und gleichzeitig bei hohen Temperaturen (bis 170 °C) abrieb- und verschleißbeständig ist. Dies gilt auch bei Anwendungen mit hohen Drücken.

Gemäß einer weiteren bevorzugten Ausführungsform der Erfindung weist der Dichtkörper als elastomeres Material VMQ, FVMQ und/oder PVMQ auf, welches bevorzugt additionsvernetzt vorliegt. Überraschend wurde erfindungsgemäß gefunden, dass ein derartiger Dichtkörper kälteflexibel bis zu Temperaturen < -50 °C ist und gleichzeitig bei hohen Temperaturen (bis 220 °C) abrieb- und verschleißbeständig ist.

Das Vernetzungsmittel verbindet bzw. vernetzt die Monomere des elastomeren Materials stellenweise untereinander durch chemische Brücken.

Der Begriff additionsvernetzt wird im herkömmlichen Sinne verstanden. Insbesondere versteht man hierunter eine chemische Reaktion, in der eine reaktive Spezies eines Vernetzungsagens z. B. Silane mit der Doppelbindung eines Polymers z.B. Vinylgruppe eines Siloxanes unter Einwirkung eines Katalysators, z.B. Pt reagiert.

In einer bevorzugten Ausführungsform wird zusätzlich zum Vernetzungsmittel ein Aktivator eingesetzt, welcher ausgewählt ist aus Kaliumstearat, Natriumstearat, Natriumoleat, anderen Alkali- und Erdalkalisalzen von Fettsäuren, Zinkdithiophosphat, Zinkdibutyldithiocarbamat, Zinkdimethyldithiocarbamat, Eisendimethyldithiocarbamat, Di-ortho-toluylguanidin (DOTG), Diphenylguanidin (DPG), Dipentamethylenthiruamdisulfid, synthetischem Hydrotalcid, Diuron, Octadecyltriethylammoniumbromid, Octadecyltriethylphosphoniumbromid, Diazabicycloundecen (DBU), Diethylthioharnstoff, Ammoniumbenzoat, Trimercapto-S-triazin, Natrium-2-ethylhexanoat und/oder aus deren Mischungen.

Alternativ oder kumulativ zum Aktivator kann zum Vernetzungsmittel Peroxid ein Coagens eingesetzt werden, welches ausgewählt ist aus 2,4,6- Tris(allyloxy)-1,3,5-triazin (TAC), Triallylisocyanurat (TAIC), 1,2-Polybutadien, 1,2-Polybutadienderivaten, N,N'-Phenylenbismaleimid, Diacrylaten, Triacrylaten, insbesondere Trimethylpropantriacrylat, Dimethacrylaten und/oder Trimethacrylaten, insbesondere Trimethylolpropantrimethacrylat (TRIM).

Je nach Anwendungsgebiet kann das elastomere Material zumindest einen Zusatzstoff enthalten, welcher ausgewählt ist aus Füllstoffen, Weichmachern, Verarbeitungshilfsmitteln, Alterungsschutzmitteln, Antioxidantien, Flammschutzmitteln, Farbstoffen, Pigmenten und/oder deren Mischungen. Der Zusatzstoff kann die physikalischen Eigenschaften, wie beispielsweise die Zugfestigkeit oder die Bruchdehnung des elastomeren Materials erhöhen. Ferner kann der Zusatzstoff die Haptik und/oder die Optik der thermoplastischen Elastomerzusammensetzung verbessern.

Ist eine weitere Erhöhung der Härte und Steifigkeit des elastomeren Materials erwünscht, kann das elastomere Material weitere Füllstoffe, vorzugsweise in einer Menge von 1 phr bis 600 phr, noch bevorzugter von 2 phr bis 200 phr, noch bevorzugter von 3 bis 100 phr, noch bevorzugter von 4 bis 80 phr und insbesondere von 5 bis 70 phr enthalten.

Zur Verbesserung der Zugfestigkeit wird als weiterer Füllstoff bevorzugt Ruß eingesetzt. Darüber hinaus können weitere Füllstoffe eingebracht werden, um das Volumen und/oder das Gewicht zu erhöhen und/oder die physikalischen Eigenschaften der Mischung zu verbessern. Zur Verbesserung der Zugfestigkeit und Abrieb werden als weiterer Füllstoff bevorzugt mineralische Füllstoffe wie Silikate, Ton, Glimmer, Kieselerde, Kreide, Kaolin, Magnesiumsilikate, Aluminiumsilikate, eingesetzt. Darüber hinaus können weitere Füllstoffe eingebracht werden, um das Volumen und/oder das Gewicht zu erhöhen und/oder die physikalischen Eigenschaften der Mischung zu verbessern. Bevorzugt ist der weitere Füllstoff ausgewählt aus Carbonaten, Oxiden, Ruß, Graphit, Aktivkohle, Calciumsulfat, Bariumsulfat, Aluminiumhydroxid und/oder deren Mischungen. Vorteilhaft an der Verwendung von Rußen ist, dass sie die inhärente elektrische Leitfähigkeit der CNT noch steigern sowie eine bessere mechanische Verstärkung bewirken. Vorteilhaft an der Verwendung von mineralischen Füllstoffen ist, dass der Abrieb deutlich verbessert wird und die Mischung eingefärbt werden kann. Das elastomere Material kann Weichmacher enthalten, ausgewählt aus Phthalatestern, Polyestern, Etherestern, Sebacaten, Polythioethern, Phosphaten, Trimellitatestern, Sulfonamiden und/oder deren Mischungen, vorzugsweise in einer Menge von 0,1 phr bis 50 phr.

Gemäß einer bevorzugten Ausführungsform kann das elastomere Material ein Antioxidans enthalten, ausgewählt aus Polycarbodiimiden, substituierten Phenolen, substituierten Bisphenolen, Dihydrochinolin, Diphenylamin, Phenyl-Naphtylamin, Paraphenyldiamin Paraphenylendiamin, Benzimidazol und/oder deren Mischungen, vorzugsweise in einer Menge von 0,1 phr bis 15 phr.

Zur Herstellung eines erfindungsgemäßen Dichtkörpers kann ein Verfahren eingesetzt werden, das folgende Schritte umfasst: Einarbeiten von CNT in ein elastomeres Material, das gegebenenfalls Zusatzstoffe enthält, in einer Mischvorrichtung unter Ausbildung einer Elastomermischung, Formgebung und gegebenenfalls Vernetzung unter Ausbildung des Dichtkörpers.

Das Einarbeiten der CNT kann kontinuierlich oder diskontinuierlich erfolgen. Zur Herstellung der Elastomermischung kann das Mischen der eingesetzten Elastomere, der Carbon Nanotubes und der optionalen Zusatzstoffe in unterschiedlicher Reihenfolge durchgeführt werden. Dabei können die Elastomere, die Carbon Nanotubes und/oder der/die Zusatzstoff(e) als Pellet, Granulat, Pulver oder Schmelze zudosiert werden.

Gemäß einer bevorzugten Ausführungsform werden zunächst die Zusatzstoffe mit dem Kautschuk vermischt und erwärmt. Zweckmäßigerweise findet ein Zerkleinern des Kautschukes und ein besonders homogenes Mischen von Elastomer, den Carbon Nanotubes und den optionalen Zusatzstoffen z.B. im Innenmischer bei einer Drehzahl im Bereich von 50 bis 250 U/min statt. Hierdurch kann die erfindungsgemäß bevorzugte homogene Verteilung der Carbon Nanotubes im Dichtkörper erzielt werden. Diese gleichmäßige Verteilung kann beispielsweise auch durch Vordispergierung sowie stark scherende Aggregate, z. B. Querstiftmischextruder erreicht werden. Zur diskontinuierlichen Mischungsherstellung können Innenmischer mit ineinandergreifenden oder tangierenden Rotorgeometrien verwendet werden, beispielsweise Banbury-Mischer oder Farrell-Mischer. Eine diskontinuierliche Herstellung ist besonders flexibel, insbesondere für den Fall, dass unterschiedliche Kautschukmischungen hergestellt werden sollen. Zur kontinuierlichen Mischungsherstellung können Extruder, beispielsweise ein Doppelschneckenextruder verwendet werden. Weiterhin bevorzugte Mischvorrichtungen sind Walzwerke.

Die Formgebung kann mit den im Stand der Technik bekannten Verfahren wie beispielsweise Compression Moulding (CM) oder Injection Moulding (IM) erzielt werden.

In Abhängigkeit des eingesetzten Kautschukmaterials findet während der Formgebung zweckmäßigerweise eine Vernetzung unter Bildung von chemischen und/oder physikalischen Bindung statt. Diese kann wie dem Fachmann bekannt ist auf übliche Weise beispielsweise durch Hitze und/oder UV-Strahlung bewirkt werden.

Ebenfalls denkbar ist die Vernetzung des Kautschukes mit dem Vernetzungsmittel während des Mischens, das heißt in-situ, insbesondere nach dem Konzept der dynamischen Vernetzung

Der Dichtkörper kann auch einer thermischen Nachbehandlung unterworfen werden. Der Dichtkörper könnte als elastischer Kunststoffkörper, mit einer für die jeweiligen Anwendungszwecke eingestellten Shore A Härte von vorzugsweise 60 bis 100, beispielsweise von 70 bis 90 Shore A und/oder von 75 bis 95 Shore A ausgebildet sein. Ein solcher Dichtkörper ist zumindest teilweise deformierbar. Darüber hinaus weist er eine zufriedenstellende Rückstellkraft auf, die die Dichtheit des Systems gewährleistet. Darüber hinaus ist das elastomere Material auch bei hohen Shore-Härten prozessfähig, das heißt nach den oben genannten Formgebungsverfahren verarbeitbar im Gegensatz zu herkömmlichen Füllstoffsystemen, die keine CNT enthalten.

Erfindungsgemäß bevorzugt ist der Dichtkörper als massiver Kunststoffkörper ausgebildet. Hieran ist vorteilig, dass der Körper gleichmäßig belastet wird, so dass Materialermüdungen vermieden werden können. Darüber hinaus ist der Fertigungsaufwand gering.

Gemäß einer besonders bevorzugten Ausführungsform der Erfindung liegt der Dichtkörper in Form einer dynamischen Dichtung, beispielsweise in Form einer Stoßdämpferdichtung, eines Radialwellendichtrings (beispielsweise Radiamatic^{®}, Cassettendichtungen, eines Nutringes, eines Lippendichtungsrings, einer Ventilschaftdichtung, einer Stangendichtung, Kolbendichtung, Membran, eines Balgs, einer Hydraulikdichtung, und/oder eines Aktuators für Ventilanwendungen vor. Gemäß einer besonders bevorzugten Ausführungsform der Erfindung liegt der Dichtkörper in Form einer statischen Dichtung für dynamische Anwendungen, beispielsweise als O-Ring, X-Ring, D-Ring, Rahmendichtung vor.

Im Folgenden wird die Erfindung anhand zweier Beispiele näher erläutert.

### Beispiel 1: Verbesserung des Verschleißes eines Radialwellendichtringes

Es wird eine für Radialwellendichtungsanwendungen typische Mischung in welcher Carbon Nanotubes gleichmäßig verteilt sind, hergestellt und auf charakteristische Kennwerte überprüft.

Als Ausgangsmaterialien werden verwendet:
- Terpolymer von Vinylidenfluorid, Hexafluoropropylen, und Tetrafluoroethylene (Dyneon 2350^{®} von 3M)
- Wollastonit-Füllstoff Nyad 400^{®} von Nyco
- Magnesiumoxid-Füllstoff (Maglite Y^{®} von Nordmann Rassmann)
- Vernetzungsaktivator (Rhenofit CF^{®} von RheinChemie Rheinau)
- Trennmittel (Carnubawax 2442^{®} von Kahl GmbH
- Carbon Nanotubes (Nanocyl NC 7000^{®} von Nanocyl)

Die Mischungen werden in einem Innenmischer Thyssen Krupp GK 1 ,5E [1.71] gemischt sowie auf einem Walzwerk Agila [1.81] homogenisiert.

| Rohstoff | Referenz 1 | Compound 1 |
|---|---|---|
| Dyneon 2350 | 100 phr | 100 phr |
| Nyad 400 | 40 phr | 40 phr |
| Maglite Y | 6 phr | 6 phr |
| Rhenofit CF | 3 phr | 3 phr |
| Carnaubawax | 1 phr | 1 phr |
| Nanocyl NC 7000 | | 5 phr |

Aus der Referenzmischung und Compound 1 werden Bauteile gefertigt mit den Abmaßen BAUM 35-52-7 (Bauform) und auf einem Prüfstand für Radialwellendichtungsringe gemessen. Die Messung erfolgt im Einklang zur Norm DIN 3761. Als Maß für den Verschleiß eines Radialwellendichtungsrings dient die Zunahme der Laufspurbreite während des Betriebes, je größer die Zunahme der Laufspurbreite, desto größer der Verschleiß, desto geringer die Lebensdauer. Als Ergebnis wird bei der Referenz eine Laufspurbreite von 0.8 mm, bei Compound 10,2 mm gemessen, was eine deutliche Verringerung darstellt. Darüber hinaus zeigen die getesteten Bauteile mit Compound 1 eine deutlich bessere optische Erscheinung der Laufspur, was sich in einer sehr glatten Oberfläche ausdrückt.

### Beispiel 2: Herstellung einer Stoßdämpferdichtung

Die Erfindung wird in einer Mischung überprüft, die für Stoßdämpfer typisch ist. Als Ausgangsmaterialien werden verwendet:
- FluorelastomerTechnoflon P 757^{®} von Solvay
- Wollastonitfüllstoff Nyad 400^{®} von Nyco
- Vernetzungsaktivator TAIC von Kettlitz
- Vernetzer (Luperox^{®} 101 G 45 von Arkema)
- Carbon Nanotubes (Nanocyl NC 7000^{®} von Nanocyl)

Die Mischungen werden in einem Innenmischer Thyssen Krupp GK 1 ,5E [1.71] gemischt sowie auf einem Walzwerk Agila [1.81] homogenisiert.

| Rohstoff | Referenz 2 | Compound 2 |
|---|---|---|
| Technoflon P 757 | 100 phr | 100 phr |
| Nyad 400 | 60 phr | 60 phr |
| TAIC | 2 phr | 2 phr |
| Luperox 101 G 45 | 2 phr | 2 phr |
| Nanocyl NC 7000 | | 5 phr |

Aus der Referenzmischung 2 und Compound 2 werden Bauteile gefertigt mit den Abmaßen DHSWV 11-31 ,2-1 ,5 und auf einem Prüfstand für Einrohr-Stoßdämpferdichtung (monotube) auf einem Tieftemperaturprüfstand gemessen. Hierzu wird ein Stoßdämpfer, der die zu prüfende Dichtung enthält, in eine Vorrichtung eingebaut, die es erlaubt, die Kolbenstange des Stoßdämpfers axial zu bewegen. Der zu prüfende Stoßdämpfer enthält einen Bauraum, der öl enthält, wobei der Austritt dieses Öls das zu bewertende Kriterium für Dichtheit darstellt. Der Stoßdämpfer wird in einer Kältekammer auf die Sta rtp rüftem pe ratu r (in diesem Fall -50 °C) abgekühlt und in die Vorrichtung eingespannt. Die Vorkonditionierung wird durch mehrfaches langsames Einfahren der Stange in den Stoßdämpfer erzielt, hierbei austretendes öl wird entfernt. Die Temperaturmessung erfolgt am Gehäuse des Stoßdämpfers in der Nähe der Dichtung. Die Messung wird während der zyklische Bewegung der Stange vollzogen, wobei sich die Temperatur durch die dynamische Bewegung der Stange in Folge von Eigenerwärmung erhöht. Die austretende Ölmenge wird in Schritten von 2 Kelvin gemessen, auftretende Öltropfen bedeuten Undichtigkeit. Je Messintervall wird eine einmalige Seitenauslenkung von 250 N auf den Stoßdämpfer aufgebracht. Die Stoßdämpferdichtung, die aus dem Referenzmaterial 2 gefertigt wurde, erzielt eine Dichtheit bis zu -30 °C, wobei mit Compound 2 eine Dichtheit bis -40 °C erzielt werden kann.

## Patentansprüche

1. Verwendung eines Dichtkörpers für dynamische Anwendungen als Stoßdämpferdichtung, mit einer Shore A Härte von 60-100, umfassend ein Kautschuk enthaltendes elastomeres Material sowie in dem elastomeren Material verteilte Carbon Nanotubes in einer Menge von 0,1 bis 20 phr, bezogen auf 100 Gewichtsteile Kautschuk.

2. Verwendung nach Anspruch 1, **gekennzeichnet durch** einen Anteil von Carbon Noanotubes im Dichtkörper im Bereich von 0,1 bis 15 phr.

3. Verwendung nach Anspruch 1 oder 2, **dadurch gekennzeichnet, dass** das elastomere Material FFKM (Perfluor-Kautschuk), FKM (Fluorkautschuk), NR (Naturkautschuk), IR (Polyisopren), IIR (Butylkautschuk), CR (Chloropren-Kautschuk), ECO, EPDM (Ethylen-Propylen-Dien-Kautschuk), EPM(Ethylen-Propylen-Kautschuk), NBR (Nitril-Butadien-Kautschuk), HNBR (Hydrierter Nitril-Butadien-Kautschuk), PU (Polyurethan), ACM (Acrylat-Kautschuk), AEM (Ethylen-Acrylsäure-Kautschuk), VMQ (Vinyl-Methyl-Polysiloxan), FVMQ (Fluormethyl-Vinyl-Polysiloxan) sowie Blends und/oder Gemische mit thermoplastische Materialien davon aufweist.

4. Verwendung nach einem oder mehreren der vorangehenden Ansprüche, **dadurch gekennzeichnet, dass** das elastomere Material PVMQ (Phenyl-Vinyl-Methyl-Polysiloxan), VMQ (Vinyl-Methyl-Polysiloxan), FVMQ (Fluormethyl-Vinyl-Polysiloxan), sowie Blends davon, aufweist und die Shore Härte > 80 Shore beträgt.

5. Verwendung nach einem oder mehreren der vorangehenden Ansprüche, **dadurch gekennzeichnet, dass** das elastomere Material EPDM (Ethylen-Propylen-Dien-Kautschuk), PVMQ (Phenyl-Vinyl-Methyl-Polysiloxan), VMQ (Vinyl-Methyl-Polysiloxan), FVMQ (Fluormethyl-Vinyl-Polysiloxan), CR (Chloropren-Kautschuk), ECO (Epichlorhydrin-Kautschuk) sowie Blends und/oder Gemische mit thermoplastischen Materialien davon, aufweist und der Verschleiß gemessen nach DIN ISO 4649 < 120 mm³ beträgt.

6. Dichtkörper für dynamische Anwendungen mit einer Shore A Härte von 60-100, umfassend ein Kautschuk enthaltendes elastomeres Material sowie in dem elastomeren Material verteilte Carbon Nanotubes in einer Menge von 0,1 bis 20 phr, bezogen auf 100 Gewichtsteile Kautschuk, wobei das elastomere Material FKM (Fluorkautschuk) aufweist, die elastomere Komponente in dem elastomeren Material zumindest teilweise vernetzt vorliegt und das elastomere Material weitere Füllstoffe enthält.

7. Dichtkörper nach Anspruch 6, **dadurch gekennzeichnet, dass** das elastomere Material zur Verbesserung der Zugfestigkeit und des Abriebs als weitere Füllstoffe mineralische Füllstoffe, wie Silikate, Ton, Glimmer, Kieselerde, Kreide, Kaolin, Magnesiumsilikate, Aluminiumsilikate enthält.

## Claims

1. Use of a sealing body for dynamic applications as a shock absorber seal having a Shore A hardness of 60-100 and comprising a rubber-containing elastomeric material and also carbon nanotubes distributed in the elastomeric material in a quantity of 0.1 to 20 phr, based on 100 parts by weight rubber.

2. Use according to Claim 1, **characterized by** a content of carbon nanotubes in the sealing body in the range from 0.1 to 15 phr.

3. Use according to Claim 1 or 2, **characterized in that** the elastomeric material comprises FFKM (perfluoroelastomer rubber), FKM (fluorine rubber), NR (natural rubber), IR (polyisoprene), IIR (butyl rubber), CR (chloroprene rubber), ECO, EPDM (ethylene propylene diene rubber), EPM (ethylene propylene rubber), NBR (nitrile butadiene rubber), HNBR (hydrogenated nitrile butadiene rubber), PU (polyurethane), ACM (acrylate rubber), AEM (ethylene acrylic rubber), VMQ (vinyl methyl polysiloxane), FVMQ (fluoromethyl vinyl polysiloxane) and blends and/or mixtures with thermoplastic materials thereof.

4. Use according to one or more of the preceding claims, **characterized in that** the elastomeric material comprises PVMQ (phenyl vinyl methyl polysiloxane), VMQ (vinyl methyl polysiloxane), FVMQ (fluoromethyl vinyl polysiloxane) and blends thereof and the Shore hardness is > 80 Shore.

5. Use according to one or more of the preceding claims, **characterized in that** the elastomeric material comprises EPDM (ethylene propylene diene rubber), PVMQ (phenyl vinyl methyl polysiloxane), VMQ (vinyl methyl polysiloxane), FVMQ (fluoromethyl vinyl polysiloxane), CR (chloroprene rubber), ECO (epichlorohydrin rubber) and blends and/or mixtures with thermoplastic materials thereof and the wear, measured to DIN ISO 4649, is < 120 mm³.

6. Sealing body for dynamic applications having a Shore A hardness of 60-100 and comprising a rubber-containing elastomeric material and also carbon nanotubes distributed in the elastomeric material in a quantity of 0.1 to 20 phr, based on 100 parts by weight rubber, the elastomeric material comprising FKM (fluorine rubber), the elastomeric component in the elastomeric material being at least partly crosslinked and the elastomeric material containing further fillers.

7. Sealing body according to Claim 6, **characterized in that** the elastomeric material contains mineral fillers, such as silicates, clay, mica, silica, chalk, kaolin, magnesium silicates and aluminium silicates, as further fillers to improve tensile strength and abrasion.

## Revendications

1. Utilisation d'un corps d'étanchéité pour des applications dynamiques en tant que joint d'amortisseur, ayant une dureté Shore A de 60 à 100, comprenant un matériau élastomère contenant du caoutchouc ainsi que des nanotubes de carbone dispersés dans le matériau élastomère en une quantité de 0,1 à 20 pce, par rapport à 100 parties en poids de caoutchouc.

2. Utilisation selon la revendication 1, **caractérisée par** une proportion de nanotubes de carbone dans le corps d'étanchéité dans la plage de 0,1 à 15 pce.

3. Utilisation selon la revendication 1 ou 2, **caractérisée en ce que** le matériau élastomère est du FFKM (caoutchouc perfluoré), FKM (caoutchouc fluoré), NR (caoutchouc naturel), IR (polyisoprène), IIR (caoutchouc butyle), CR (caoutchouc chloroprène), ECO, EPDM (caoutchouc éthylène-propylène-diène), EPM (caoutchouc éthylène-propylène), NBR (caoutchouc nitrile-butadiène), HNBR (caoutchouc nitrile-butadiène hydrogéné), PU (polyuréthane), ACM (caoutchouc acrylate), AEM (caoutchouc éthylène-acide acrylique), VMQ (vinyl-méthyl-polysiloxane), FVMQ (fluorométhyl-vinyl-polysiloxane) ainsi que des coupes et/ou des mélanges avec des matériaux thermoplastiques de ceux-ci.

4. Utilisation selon une ou plusieurs des revendications précédentes, **caractérisée en ce que** le matériau élastomère présente du PVMQ (phényl-vinyl-méthyl-polysiloxane), du VMQ (vinyl-méthyl-polysiloxane), du FVMQ (fluorométhyl-vinyl-polysiloxane), ainsi que des coupes de ceux-ci, et la dureté Shore est > 80 Shore.

5. Utilisation selon une ou plusieurs des revendications précédentes, **caractérisée en ce que** le matériau élastomère est de l'EPDM (caoutchouc éthylène-propylène-diène), du PVMQ (phényl-vinyl-méthyl-polysiloxane), du VMQ (vinyl-méthyl-polysiloxane), du FVMQ (fluorométhyl-vinyl-polysiloxane), du CR (caoutchouc chloroprène), de l'ECO (caoutchouc épichlorhydrine) ainsi que des coupes et/ou des mélanges avec des matériaux thermoplastiques de ceux-ci, et l'usure mesurée selon DIN ISO 4649 est < 120 mm³.

6. Corps d'étanchéité pour des applications dynamiques ayant une dureté Shore A de 60 à 100, comprenant un matériau élastomère contenant du caoutchouc ainsi que des nanotubes de carbone dispersés dans le matériau élastomère en une quantité de 0,1 à 20 pce, par rapport à 100 parties en poids de caoutchouc, le matériau élastomère présentant du FKM (caoutchouc fluoré), le composant élastomère étant au moins partiellement réticulé dans le matériau élastomère et le matériau élastomère contenant d'autres charges.

7. Corps d'étanchéité selon la revendication 6, **caractérisé en ce que** le matériau élastomère contient, pour améliorer la résistance à la traction et l'abrasion, comme autres charges, des charges minérales telles que des silicates, de l'argile, du mica, de la silice, de la craie, du kaolin, des silicates de magnésium, des silicates d'aluminium.
